# FASCICULE DE BREVET EUROPEEN

(11) **EP 3 874 184 B1**
(45) Date de publication et mention de la délivrance du brevet: **12.04.2023**
(21) Numéro de dépôt: 19845585.9
(22) Date de dépôt: 13.12.2019
(51) Int. Cl.: F16J 15/08, F16L 23/20

(54) **JOINT D'ÉTANCHÉITÉ MÉTALLIQUE COMPORTANT UNE COUCHE EXTERNE D'ÉTANCHÉITÉ TEXTURÉE**
METALLDICHTUNG MIT EINER STRUKTURIERTEN ÄUSSEREN DICHTUNGSSCHICHT
METAL SEAL COMPRISING A TEXTURED OUTER SEALING LAYER

(30) Priorité: 14.12.2018 FR 1872908
(43) Date de publication de la demande: 08.09.2021
(73) Titulaire: Commissariat à l'énergie atomique et aux énergies alternatives, 75015 Paris (FR); Technetics Group France SAS, 42000 Saint-Etienne (FR)
(72) Inventeur: LEDRAPPIER, Florent, 26130 SAINT PAUL TROIS CHATEAUX (FR); JULIAA, Jean-François, 26200 MONTELIMAR (FR); TEISSIER, Marin, 26130 SAINT PAUL TROIS CHATEAUX (FR); LEFRANCOIS, Michel, 42000 SAINT ETIENNE (FR); DAVID, Thierry, 84100 UCHAUX (FR); ZAOUTER, Tony, 56870 BADEN (FR)
(74) Mandataire: Brevalex
(86) Numéro de dépôt international: PCT/FR2019/053058
(87) Numéro de publication internationale: WO 2020/120920

(56) Documents cités:
- EP-A2- 0 148 088
- FR-A1- 2 823 826
- FR-A5- 2 151 186
- JP-A- S6 034 573

## Description

### DOMAINE TECHNIQUE

La présente invention se rapporte au domaine des joints d'étanchéité métalliques statiques.

Elle trouve des applications dans différents domaines de l'industrie, et typiquement pour la réalisation de l'étanchéité entre deux brides.

L'invention concerne ainsi un joint d'étanchéité métallique statique comportant une couche externe d'étanchéité présentant une surface texturée.

### ÉTAT DE LA TECHNIQUE ANTÉRIEURE

Le joint d'étanchéité métallique est une technologie très utilisée dans de nombreuses applications d'étanchéité critiques, typiquement dans des situations où l'on retrouve une ou plusieurs des quatre conditions suivantes : ultravide, forte pression, liquide chimiquement agressif, température élevée.

Comme pour tout joint d'étanchéité, on cherche à obtenir conjointement : un haut niveau d'étanchéité ; un effort de compression le plus faible possible ; une piste d'étanchéité la plus large possible.

Répondre à cette problématique est à ce jour faisable, sous réserve d'avoir, au contact des brides, un matériau d'étanchéité très ductile, comme par exemple de l'argent.

Ainsi, un exemple de joint d'étanchéité métallique est décrit dans la demande de brevet français FR 2 151186 A1. Suivant cet exemple, un revêtement extérieur est plastifié lors de l'écrasement du joint et s'insère dans les rugosités des brides en contact. Un ressort écrasé radialement assure la raideur initiale (pour plastifier le revêtement) et le retour élastique après écrasement. Ce concept présente de nombreux avantages : piste d'étanchéité large, haut niveau d'étanchéité, adaptabilité à de larges tolérances de profondeur de gorge. L'effort nécessaire pour comprimer le joint est par contre conséquent, et ceci est d'autant plus vrai avec certains revêtements d'étanchéité. Par exemple, l'effort linéique de serrage peut plus que doubler si l'on passe d'un revêtement d'argent à un revêtement de nickel.

La demande de brevet européen EP 0 148 088 A2 présente une évolution de ce concept, en y ajoutant une opération d'usinage créant des parties saillantes au contact des portées. En appliquant la contrainte de plastification du revêtement sur une ligne plus étroite, on peut ainsi diminuer l'effort global de compression du joint. Ceci a cependant un certain nombre d'inconvénients. Tout d'abord la largeur de piste se retrouve très réduite. Un défaut radial, même de petite dimension, sur la portée d'étanchéité risque fortement d'induire une fuite. De plus, la concentration d'efforts sur une ligne saillante peut, notamment si le matériau d'étanchéité est peu ductile, créer sur les faces de brides des renfoncements locaux de surface, couramment appelés « matages ».

Alternativement à cela, la demande de brevet FR 2 823 826 A1 propose de multiplier les saillants périphériques. En comparaison avec une solution avec un seul saillant, on limite le risque de fuite en cas de défaut radial. Le problème du matage n'est quant à lui pas résolu.

On peut encore noter l'existence du brevet américain US 8,146,924 B2 qui décrit un joint d'étanchéité métallique à faible force de compression comprenant une couche de revêtement pourvue d'un matériau polymère sur une surface d'étanchéité du joint.

Il existe des applications industrielles pour lesquelles il est nécessaire d'utiliser un revêtement peu ductile, par exemple pour des questions de compatibilité chimique. En ce cas, on s'aperçoit que l'art antérieur connu ne permet pas de travailler efficacement avec ce type de matériau : étancher correctement sur une piste large sans pour autant augmenter l'effort de compression ou endommager les brides n'est pas réalisable.

En conséquence, il existe un besoin pour proposer une solution permettant, pour un effort de serrage donné, d'augmenter les pressions de contact locales qui favorisent l'obturation des chemins de fuite, tout en conservant une large piste d'étanchéité permettant de s'adapter aux défauts géométriques de la portée.

### EXPOSÉ DE L'INVENTION

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, un joint d'étanchéité métallique statique comportant une couche externe d'étanchéité, caractérisé en ce que la couche externe d'étanchéité comporte une surface texturée configurée pour venir au contact des surfaces à étancher, ladite surface texturée comportant un réseau de renfoncements espacés les uns des autres sur la surface texturée, les renfoncements étant borgnes, ne traversant pas complètement la couche externe d'étanchéité, et étant non-communiquants entre eux.

Avantageusement, le joint d'étanchéité métallique statique peut présenter, en section transversale, au moins une partie creuse, notamment une pluralité de parties creuses, configurée(s) pour limiter l'effort nécessaire à l'écrasement du joint d'étanchéité. Aussi, le joint d'étanchéité métallique statique peut être un joint d'étanchéité dit « creux », à l'inverse des joints d'étanchéité dits « massifs ». En particulier, au moins l'une de la ou des couches constitutives du joint d'étanchéité peut présenter, en section transversale, ladite au moins une partie creuse. De plus, ladite au moins une partie creuse peut avantageusement s'étendre sur toute la circonférence de la ou des couches correspondantes.

De façon avantageuse, la présence d'une partie creuse dans le joint d'étanchéité selon l'invention peut permettre d'améliorer l'effet obtenu par la présence de la surface texturée. En effet, à l'inverse d'un joint d'étanchéité massif, le joint d'étanchéité creux peut permettre un meilleur contrôle de l'effort d'écrasement, et ce contrôle de l'écrasement favorise le bon fonctionnement de la surface texturée.

Par « couche externe d'étanchéité », on entend une couche dont la surface se déforme pour assurer le bouchage des défauts de surface de la portée pour réaliser ainsi l'étanchéité.

De façon non exhaustive, la couche externe d'étanchéité peut comporter : un revêtement, par exemple un feuillard, formant une barrière d'étanchéité qui recouvre l'âme du joint ; un dépôt, par exemple électrolytique, formant une couche d'étanchéité de contact qui recouvre les pistes d'étanchéité ; le matériau même de la dernière couche de l'âme du joint avec ou sans traitement destiné à diminuer ses propriétés mécaniques de surface.

Grâce à l'invention, l'utilisation d'un joint d'étanchéité métallique présentant une surface texturée permet l'avantage de favoriser la pénétration de la surface d'étanchéité du joint dans les anfractuosités de la surface en regard tout en conservant une large piste d'étanchéité : d'une part, en diminuant le taux de portance, et d'autre part, en facilitant l'écoulement plastique de la matière. L'invention peut ainsi permettre de limiter les efforts de serrage nécessaires pour obtenir l'étanchéité ou d'améliorer l'étanchéité pour un effort de serrage donné.

Diverses géométries de renfoncements peuvent être envisagées en fonction des conditions de service et des matériaux d'étanchéité employés.

Le joint d'étanchéité métallique selon l'invention peut en outre comporter l'une ou plusieurs des caractéristiques suivantes prises isolément ou suivant toutes combinaisons techniques possibles.

La surface texturée peut être formée de manière partielle sur la couche externe d'étanchéité, notamment au niveau de portions de la couche externe d'étanchéité destinées à venir au contact des surfaces à étancher.

Selon une première variante, la couche externe d'étanchéité forme à elle seule le joint d'étanchéité métallique. Le joint d'étanchéité métallique est ainsi dépourvu d'âme.

Selon une deuxième variante, le joint d'étanchéité métallique comporte une âme métallique enveloppée dans la couche externe d'étanchéité. Dans ce cas, la couche externe d'étanchéité peut être appliquée sur l'âme métallique de manière à obtenir une interface étanche avec l'âme métallique, notamment en réalisant la couche externe d'étanchéité par le biais d'un dépôt de matière sur l'âme métallique. La couche externe d'étanchéité peut encore être constituée d'un matériau rapporté sur l'âme métallique en formant avec celle-ci une interface non étanche.

L'âme métallique peut être constituée par un ressort, notamment un ressort hélicoïdal à spires jointives refermé sur lui-même et présentant, à l'état de repos, la forme d'un tore. La couche externe d'étanchéité, dans laquelle l'âme est insérée, peut présenter, à l'état de repos, la forme d'une surface torique dont le cercle générateur ne se referme pas sur lui-même. Plus précisément, la surface texturée peut être appliquée en surface de la couche externe d'étanchéité, dans les portions destinées à être en contact avec les faces à étancher, d'un joint d'étanchéité métallique à âme ressort tel que décrit dans la demande de brevet français FR 2 151186 A1.

La couche externe d'étanchéité peut comporter une barrière d'étanchéité et une éventuelle couche d'étanchéité de contact sur la barrière d'étanchéité. Cette couche d'étanchéité de contact peut en particulier être un traitement de surface d'étanchéité, notamment une couche d'un dépôt électrolytique, par exemple de Nickel, et/ou une barrière additionnelle d'étanchéité, qui est indépendante de la barrière d'étanchéité.

Les renfoncements peuvent être présents uniquement sur la barrière d'étanchéité en l'absence de couche d'étanchéité de contact, ces renfoncements étant borgnes.

Les renfoncements peuvent encore être présents sur la couche d'étanchéité de contact.

En particulier, les renfoncements peuvent être présents sur une couche d'étanchéité de contact sous la forme d'une couche d'un dépôt électrolytique de façon borgne ou non.

Les renfoncements peuvent encore être présents sur la couche d'étanchéité de contact sous forme d'une barrière d'étanchéité additionnelle de façon borgne. Dans ce cas, la couche d'étanchéité de contact sous forme d'une barrière d'étanchéité additionnelle est indépendante de la barrière d'étanchéité sur laquelle elle repose. Il n'y a donc pas de contact intime entre ces deux éléments. Les renfoncements ne peuvent alors pas traverser complètement la couche d'étanchéité de contact sinon une fuite est créée.

La profondeur des renfoncements est inférieure à l'épaisseur de la couche externe d'étanchéité. La profondeur des renfoncements peut encore être inférieure à l'épaisseur de la couche d'étanchéité de contact. En variante, la profondeur des renfoncements peut être supérieure à l'épaisseur de la couche d'étanchéité de contact et inférieure à la somme des épaisseurs de la couche d'étanchéité de contact et de la barrière d'étanchéité.

De plus, l'axe de profondeur de chaque renfoncement peut être sensiblement perpendiculaire à la surface texturée.

Chaque renfoncement peut être défini par au moins une paroi creusée dans la surface texturée qui est sensiblement perpendiculaire à la surface texturée.

Par ailleurs, le taux de portance, défini dans la surface texturée par le rapport surface hors renfoncements sur surface totale de la surface texturée, peut préférentiellement être inférieur à 40 %.

La surface texturée peut comporter un réseau de renfoncements sous la forme de trous circulaires, dont les axes sont notamment sensiblement perpendiculaires à la surface texturée. Le rapport entre l'entraxe des trous circulaires, soit la distance entre les centres de deux trous circulaires adjacents, et le rayon d'un trou circulaire, correspondant à la moitié du diamètre d'un trou circulaire, peut être inférieur ou égal à 3.

En variante, la surface texturée peut comporter un réseau de renfoncements sous la forme de trous de forme allongée, notamment de forme oblongue, elliptique et/ou rectangulaire. Alors, le grand axe de chaque trou de forme allongée peut être sensiblement parallèle à la ligne d'étanchéité du joint, et ce en tout point du joint d'étanchéité.

Par ailleurs, le joint d'étanchéité métallique peut être un joint d'étanchéité dont la section est en forme de O (« O-Ring » en anglais) ou un joint d'étanchéité dont la section est en forme de C (« C-Ring » en anglais) ou un joint d'étanchéité dont la section est en forme de U couché.

Selon l'invention la surface texturée est réalisée par le biais d'un enlèvement de matière par laser.

Le joint d'étanchéité métallique selon l'invention peut comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 représente, selon une vue en coupe, un exemple de joint d'étanchéité métallique statique sous la forme d'un joint métallique élastique à ressort conforme à l'invention,
- la figure 2 représente, selon une vue partielle en perspective, l'exemple de joint d'étanchéité de la figure 1, le ressort n'étant pas représenté, le joint étant structuré en surface,
- la figure 3 illustre une vue de détails, selon A, de la figure 2 pour présenter un premier exemple de réalisation de la surface texturée, avec des renfoncements de forme circulaire,
- la figure 4 est une vue en coupe partielle selon C-C de la figure 3,
- la figure 5 illustre une vue de détails, selon A, de la figure 2 pour présenter un deuxième exemple de réalisation de la surface texturée, avec des renfoncements de forme oblongue,
- la figure 6 est un graphique illustrant l'intérêt de la texturation en présentant l'évolution de l'étanchéité G, exprimée en Pa.m³/s, pour différentes texturations de surface en fonction de la pression d'assise PrA, exprimée en MPa, et
- les figures 7 à 19 illustrent, en coupe partielle, divers exemples de joints d'étanchéité métalliques conformes à l'invention, les figures 11, 15, 16 et 19 présentant des vues en coupe de détails de renfoncements.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

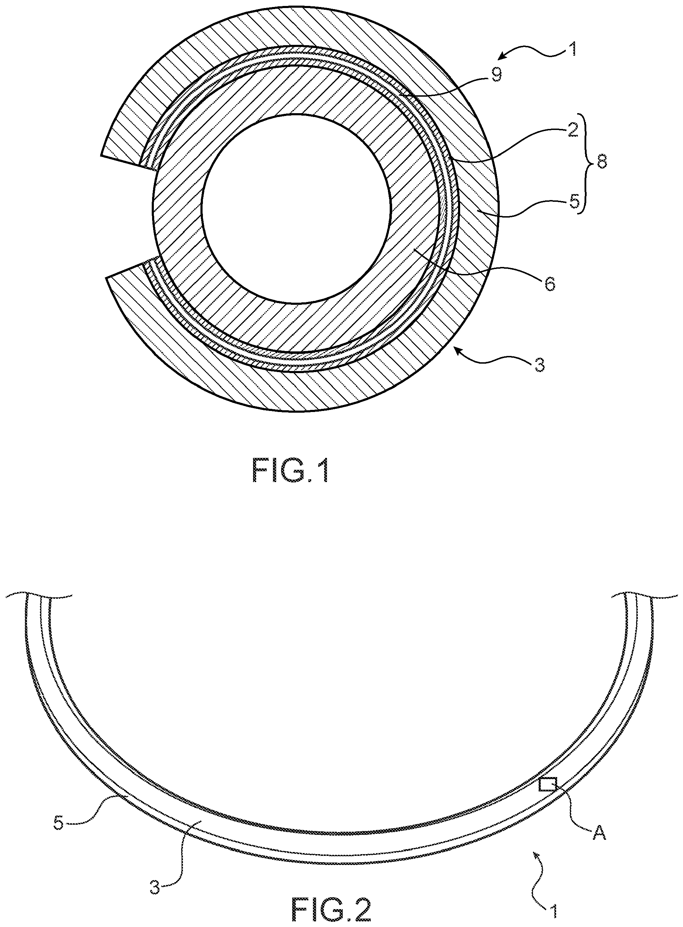

Il va maintenant être décrit, en référence aux figures 1 à 19, des exemples de réalisation de l'invention.

Il est à noter que, de façon avantageuse, l'invention propose une approche différente dans la modification de la surface du joint métallique dans les zones appelées à être en contact avec les faces à étancher. Cette approche est applicable à tous types de joints métalliques.

Ainsi, comme visible sur la figure 1, le joint d'étanchéité métallique statique 1 conforme à l'invention, sous forme d'un joint métallique élastique à ressort, comporte une âme métallique 6, formée par un ressort, et une couche externe d'étanchéité 8 comprenant une barrière d'étanchéité 2, laquelle comporte une partie creuse 9 sur toute la circonférence de la barrière d'étanchéité 2 pour permettre de limiter l'effort nécessaire à l'écrasement du joint 1, et une couche d'étanchéité de contact 5. La couche externe d'étanchéité 8 comporte une surface texturée 3, sur la couche d'étanchéité de contact 5, configurée pour venir au contact des surfaces à étancher.

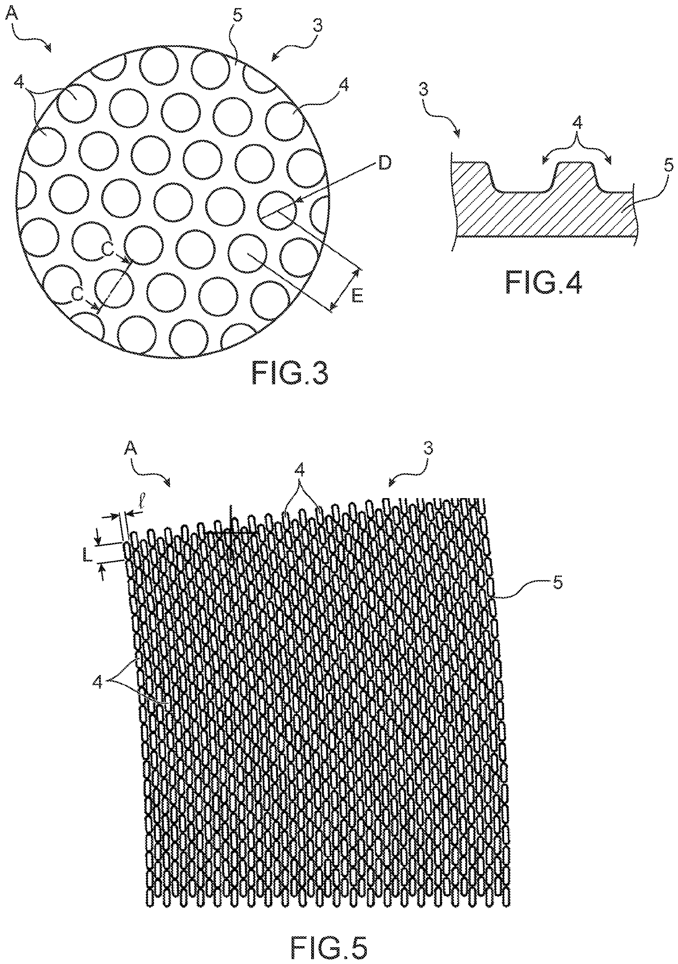

Comme visible sur les figures 3 et 4, cette surface texturée 3 comporte un réseau de renfoncements 4 espacés les uns des autres sur la surface texturée 3, les renfoncements 4 étant borgnes, ne traversant pas complètement la couche d'étanchéité de contact 5, et étant non-communiquants entre eux.

Ainsi, l'invention met en oeuvre une texturation de la surface de la couche externe d'étanchéité 8. La couche externe d'étanchéité 8 est distincte de l'âme métallique 6, l'âme métallique 6 étant encastrée dans la couche externe d'étanchéité 8. En particulier, la barrière d'étanchéité 2 peut être constituée d'un matériau rapporté sur l'âme métallique 6. La barrière d'étanchéité 2 et la couche d'étanchéité de contact 5 forment une interface étanche (les fluides ne peuvent pas diffuser à l'interface).

Sur cette surface texturée 3, comme mieux visible sur les figures 3, 4 et 5, on apporte un réseau de renfoncements 4, dont l'axe est parallèle à la direction de compression du joint. Ces renfoncements 4 sont un réseau de motifs discontinus sur toute la surface de contact du joint. Il est à noter que ce réseau de renfoncements 4 discontinu laisse en positif un maillage continu de la surface.

Les matières peu ductiles ont tendance à s'écrouir rapidement. Il importe donc de leur laisser des degrés de liberté pour leur permettre de mieux s'écouler lors de leur compression axiale. Les espaces libres laissés par les renfoncements 4 permettent à la matière de se répartir plus aisément dans un plan perpendiculaire à la direction de compression.

Ces renfoncements 4 permettent également de réduire la surface d'appui du joint 1: à effort de serrage identique, la pression de contact sur le matériau est localement plus importante et la pénétration du matériau dans les rugosités des brides en contact augmente. Le risque de matage est également réduit, car la surface de contact 3 ainsi texturée ne présente pas de géométrie explicitement saillante ; l'augmentation de pression de contact se fait donc sans points singuliers et de manière homogène.

La largeur de piste reste suffisamment large pour prévenir une fuite due à un défaut de surface local (rayures sur les brides par exemple). Il est également à noter que la discontinuité du réseau de renfoncements 4 a l'avantage de constituer naturellement des cellules de confinement de la fuite ; celles-ci peuvent se révéler utiles, par exemple si la surface d'étanchéité de la bride est dégradée, ou dans le cas d'un défaut de concentricité entre les stries d'usinage de la bride et le joint.

Par ailleurs, la modification de surface proposée est moins fragile qu'un usinage de surface saillant grâce à son taux de portance plus important et sa géométrie non saillante, ce qui se démarque de la divulgation de la demande de brevet français FR 2 557 662 A1.

De plus, il importe que la géométrie des renfoncements 4 soit maîtrisée et il convient également que leur création ne génère pas de changement local pénalisant pour l'obtention de l'étanchéité dans les caractéristiques du matériau à leur voisinage. Le processus pour les créer est donc important vis-à-vis de ces points. Un enlèvement de matière par laser, par exemple, peut permettre de maîtriser conjointement la géométrie des renfoncements 4 et leur impact sur les zones à leur voisinage.

Des géométries préférées de texturation permettent d'optimiser la performance du joint d'étanchéité 1. Un premier exemple, visible sur la figure 3, consiste en la création de trous circulaires 4, dont les axes sont perpendiculaires à la surface du joint.

Préférentiellement, on réalise chaque trou 4 de telle sorte que sa surface cylindrique soit le plus perpendiculaire possible à la surface du joint 1. La profondeur des renfoncements 4 sera suffisante pour permettre un écoulement de la matière, par exemple de l'ordre de 40 µm. Le diamètre D est de l'ordre de 40 µm, et l'entraxe E, distance entre les centres de deux trous circulaires adjacents, est de l'ordre de 54 µm.

De plus, afin d'avoir une réduction significative du taux de portance, préférentiellement mais non exclusivement de l'ordre de 40 %, le rapport 2E/D est préférentiellement inférieur à trois. Il reste alors une portance suffisante pour recouvrir des micro-défauts potentiels de la bride, avec cependant une amélioration des efforts et des pressions de contact très intéressante.

Un deuxième exemple de texturation intéressant consiste en la réalisation de trous allongés 4, préférentiellement de forme générale oblongue ou elliptique, comme visible sur la figure 5. La longueur L peut être de l'ordre de 120 µm, la largeur I peut être de l'ordre de 40 µm et la profondeur peut être de l'ordre de 40 µm.

De manière préférentielle, le grand axe d'une telle forme sera alors parallèle à la ligne d'étanchéité, et ce en tout point du joint.

Dans un mode de réalisation préféré, la texturation choisie peut être appliquée en surface de la couche d'étanchéité d'un joint métallique à âme ressort tel que décrit dans la demande de brevet français FR 2 151186 A1.

Par ailleurs, la texturation choisie peut être appliquée en surface de la couche d'étanchéité d'un joint de type O-Ring, en forme de O, ou encore d'un joint de type C-Ring, en forme de C, cette liste n'étant pas limitative.

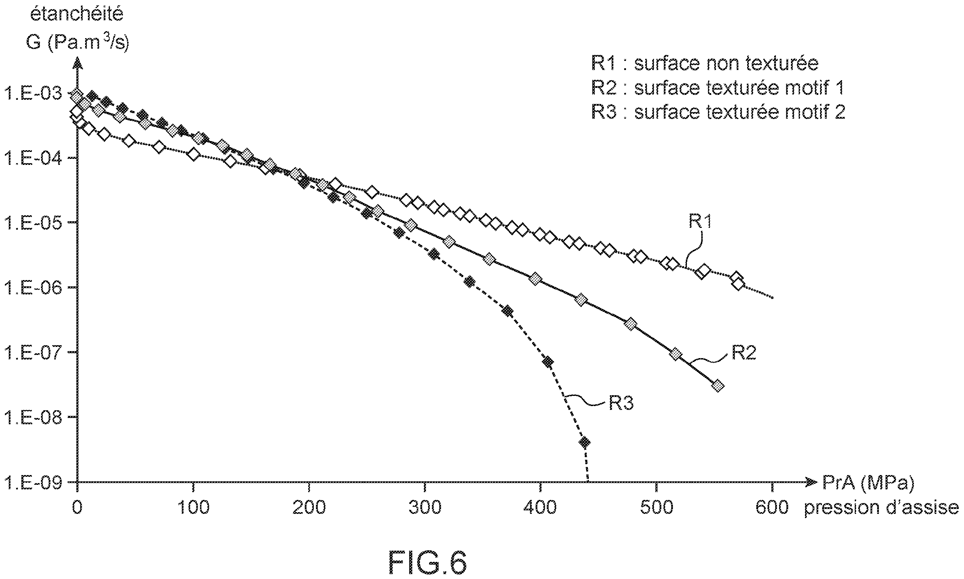

Le gain en étanchéité est illustré sur la figure 6, comparant l'évolution du flux de fuite G en fonction de la pression d'assise PrA, sur laquelle la courbe R1 représente une courbe de référence (surface non texturée), la courbe R2 représente une portance de 60 % (surface texturée de motif 1) et la courbe R3 représente une portance de 40 % (surface texturée de motif 2). Dans cet exemple, l'avantage de la texturation au-dessus de 200 MPa est très net.

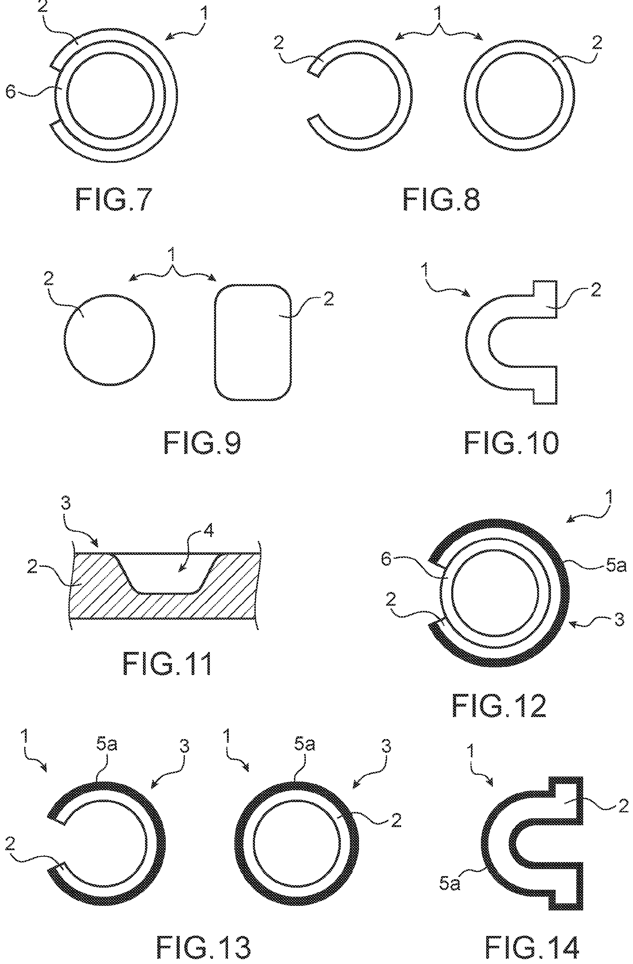

Les figures 7 à 19 illustrent, en coupe partielle, des exemples de joints d'étanchéité métalliques 1 conformes à l'invention.

Les figures 7 à 10 illustrent des joints métalliques 1 comprenant une couche externe d'étanchéité 8 formée par une unique barrière d'étanchéité 2, laquelle comporte des renfoncements 4 non-débouchants comme visible sur la figure 11 qui est une vue en coupe partielle de la barrière d'étanchéité 2.

La figure 7 illustre un joint métallique élastique 1 à ressort comprenant une âme métallique 6 sous la forme d'un ressort. La figure 8 illustre deux joints métalliques élastiques 1 dont la section est en forme de O ou en forme de C. La figure 9 illustre deux joints métalliques 1 de section circulaire ou sensiblement rectangulaire. La figure 10 illustre un joint métallique usiné 1 de section en forme de U couché.

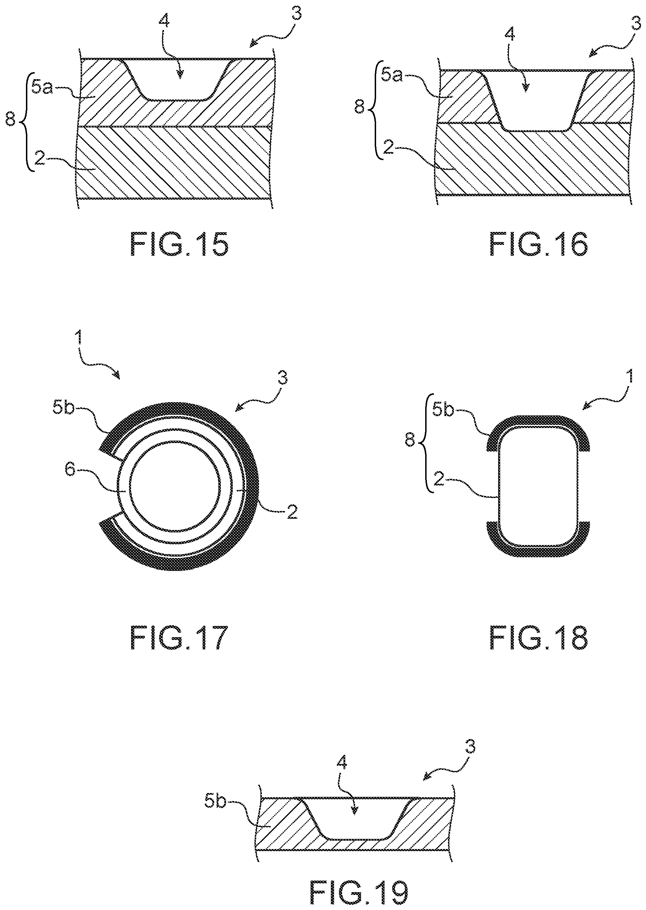

Les figures 12 à 14 illustrent des joints métalliques 1 avec une couche externe d'étanchéité 8 comprenant une barrière d'étanchéité 2 et une couche d'étanchéité de contact sous la forme d'un traitement de surface de type dépôt électrolytique 5a, lequel comporte des renfoncements 4 non-débouchants dans la couche 5a comme visible sur la figure 15, qui est une vue en coupe partielle de la couche externe d'étanchéité 8, ou non-débouchants dans les couches 5a et 2 comme visible sur la figure 16, qui est une vue en coupe partielle de la couche externe d'étanchéité 8.

La figure 12 illustre un joint métallique élastique 1 à ressort comprenant une âme métallique 6 sous la forme d'un ressort. La figure 13 illustre deux joints métalliques élastiques 1 dont la section est en forme de O ou en forme de C. La figure 14 illustre un joint métallique 1 usiné de section en forme de U couché.

Les figures 17 et 18 illustrent des joints métalliques 1 avec une barrière d'étanchéité 2, massive dans le cas de la figure 18, comprenant un traitement de surface sous la forme d'une barrière d'étanchéité additionnelle 5b, laquelle comporte des renfoncements 4 non-débouchants comme visible sur la figure 19, qui est une vue en coupe partielle de la barrière d'étanchéité additionnelle 5b.

La figure 17 illustre un joint métallique élastique 1 à ressort comprenant une âme métallique 6 sous la forme d'un ressort. La figure 18 illustre un joint métallique 1 de section sensiblement rectangulaire.

Bien entendu, l'invention n'est pas limitée aux exemples de réalisation qui viennent d'être décrits. Diverses modifications peuvent y être apportées par l'homme du métier.

En outre, il faut noter que, quand bien même seul l'exemple précédent décrit en référence à la figure 1 montre la présence d'une partie creuse 9 dans le joint d'étanchéité 1, tous les exemples de joints d'étanchéité 1 décrits précédemment peuvent avantageusement comporter une ou plusieurs parties creuses 9 permettant de limiter l'effort nécessaire à l'écrasement.

## Revendications

1. Joint d'étanchéité métallique statique (1), qui présente, en section transversale, au moins une partie creuse (9) configurée pour limiter l'effort nécessaire à l'écrasement du joint d'étanchéité (1), et qui comporte une couche externe d'étanchéité (8), **caractérisé en ce que** la couche externe d'étanchéité (8) comporte une surface texturée (3) configurée pour venir au contact des surfaces à étancher, ladite surface texturée (3) comportant un réseau de renfoncements (4) espacés les uns des autres sur la surface texturée (3), les renfoncements (4) étant borgnes, ne traversant pas complètement la couche externe d'étanchéité (8), et étant non-communiquants entre eux, ladite surface texturée (3) étant réalisée par le biais d'un enlèvement de matière par laser.

2. Joint selon la revendication 1, **caractérisé en ce que** la couche externe d'étanchéité (8) forme à elle seule le joint d'étanchéité métallique (1).

3. Joint selon la revendication 1, **caractérisé en ce qu'**il comporte une âme métallique (6) enveloppée dans la couche externe d'étanchéité (8).

4. Joint selon la revendication 3, **caractérisé en ce que** l'âme métallique (6) est constituée par un ressort, notamment un ressort hélicoïdal à spires jointives refermé sur lui-même et présentant, à l'état de repos, la forme d'un tore.

5. Joint selon la revendication 4, **caractérisé en ce que** la couche externe d'étanchéité (8), dans laquelle l'âme (6) est insérée, présente, à l'état de repos, la forme d'une surface torique dont le cercle générateur ne se referme pas sur lui-même.

6. Joint selon l'une quelconque des revendications précédentes, **caractérisé en ce que** la couche externe d'étanchéité (8) comporte une barrière d'étanchéité (2) et une couche d'étanchéité de contact (5, 5a, 5b), notamment une couche d'un dépôt électrolytique (5a) et/ou une barrière additionnelle d'étanchéité (5b).

7. Joint selon la revendication 6, **caractérisé en ce que** les renfoncements (4) sont présents sur la couche d'étanchéité de contact (5, 5a, 5b) de façon borgne ou non.

8. Joint selon l'une quelconque des revendications précédentes, **caractérisé en ce que** l'axe de profondeur de chaque renfoncement (4) est sensiblement perpendiculaire à la surface texturée (3).

9. Joint selon l'une quelconque des revendications précédentes, **caractérisé en ce que** chaque renfoncement (4) est défini par au moins une paroi creusée dans la surface texturée (3) qui est sensiblement perpendiculaire à la surface texturée (3).

10. Joint selon l'une quelconque des revendications précédentes, **caractérisé en ce que** le taux de portance, défini dans la surface texturée (3) par le rapport surface hors renfoncements (4) sur surface totale de la surface texturée (3), est inférieur à 40%.

11. Joint selon l'une quelconque des revendications précédentes, **caractérisé en ce que** la surface texturée (3) comporte un réseau de renfoncements (4) sous la forme de trous circulaires, dont les axes sont notamment sensiblement perpendiculaires à la surface texturée (3).

12. Joint selon la revendication 11, **caractérisé en ce que** le rapport entre l'entraxe (E) des trous circulaires (4), soit la distance entre les centres de deux trous circulaires (4) adjacents, et le rayon d'un trou circulaire (4), correspondant à la moitié du diamètre (D) d'un trou circulaire (4), est inférieur ou égal à 3.

13. Joint selon l'une quelconque des revendications 1 à 10, **caractérisé en ce que** la surface texturée (3) comporte un réseau de renfoncements (4) sous la forme de trous de forme allongée, notamment de forme oblongue, elliptique et/ou rectangulaire.

14. Joint selon la revendication 13, **caractérisé en ce que** le grand axe de chaque trou de forme allongée (4) est sensiblement parallèle à la ligne d'étanchéité du joint, et ce en tout point du joint d'étanchéité (1).

15. Joint selon l'une quelconque des revendications précédentes, **caractérisé en ce que** le joint d'étanchéité métallique (1) est un joint d'étanchéité dont la section est en forme de O ou un joint d'étanchéité dont la section est en forme de C ou un joint d'étanchéité dont la section est en forme de U couché.

## Patentansprüche

1. Statische metallische Dichtungsverbindung (1), die im Querschnitt mindestens ein Hohlteil (9) aufweist, das konfiguriert ist, um die Kraft zu begrenzen, die zum Zusammendrücken der Dichtungsverbindung (1) erforderlich ist, und die eine äußere Dichtungsschicht (8) umfasst, **dadurch gekennzeichnet, dass** die äußere Dichtungsschicht (8) eine texturierte Oberfläche (3) umfasst, die konfiguriert ist, um mit den abzudichtenden Oberflächen in Kontakt zu kommen, wobei die texturierte Oberfläche (3) eine Anordnung von Vertiefungen (4) umfasst, die auf der texturierten Oberfläche (3) voneinander beabstandet sind, wobei die Vertiefungen (4) blind sind, die äußere Dichtungsschicht (8) nicht vollständig durchqueren und nicht miteinander in Verbindung stehen, wobei die texturierte Oberfläche (3) durch eine Materialabtragung mittels Laser hergestellt ist.

2. Verbindung nach Anspruch 1, **dadurch gekennzeichnet, dass** die äußere Dichtungsschicht (8) alleine die metallische Dichtungsverbindung (1) bildet.

3. Verbindung nach Anspruch 1, **dadurch gekennzeichnet, dass** sie einen Metallkern (6) umfasst, der von der äußeren Dichtungsschicht (8) umhüllt ist.

4. Verbindung nach Anspruch 3, **dadurch gekennzeichnet, dass** der Metallkern (6) durch eine Feder gebildet wird, insbesondere eine Spiralfeder mit aneinandergrenzenden Windungen, die in sich geschlossen ist und im Ruhezustand die Form eines Torus aufweist.

5. Verbindung nach Anspruch 4, **dadurch gekennzeichnet, dass** die äußere Dichtungsschicht (8), in die der Kern (6) eingesetzt ist, im Ruhezustand die Form einertorusförmigen Oberfläche aufweist, deren erzeugender Kreis sich nicht in sich schließt.

6. Dichtung nach einem der vorhergehenden Ansprüche, **dadurch gekennzeichnet, dass** die äußere Dichtungsschicht (8) eine Dichtungsbarriere (2) und eine Kontaktdichtungsschicht (5, 5a, 5b), insbesondere eine Schicht aus einer galvanischen Abscheidung (5a) und/oder eine zusätzliche Dichtungsbarriere (5b), umfasst.

7. Verbindung nach Anspruch 6, **dadurch gekennzeichnet, dass** die Vertiefungen (4) blind oder nicht blind auf der Kontaktdichtungsschicht (5, 5a, 5b) vorhanden sind.

8. Verbindung nach einem der vorhergehenden Ansprüche, **dadurch gekennzeichnet, dass** die Tiefenachse jeder Vertiefung (4) im Wesentlichen senkrecht zu der texturierten Oberfläche (3) verläuft.

9. Verbindung nach einem der vorhergehenden Ansprüche, **dadurch gekennzeichnet, dass** jede Vertiefung (4) durch mindestens eine hohle Wand in der texturierten Oberfläche (3) definiert ist, die im Wesentlichen senkrecht zu der texturierten Oberfläche (3) verläuft.

10. Verbindung nach einem der vorhergehenden Ansprüche, **dadurch gekennzeichnet, dass** die Tragfähigkeitsrate, die in der texturierten Oberfläche (3) durch das Verhältnis der Oberfläche ohne Vertiefungen (4) zur Gesamtoberfläche der texturierten Oberfläche (3) definiert ist, kleiner als 40 % ist.

11. Verbindung nach einem der vorhergehenden Ansprüche, **dadurch gekennzeichnet, dass** die texturierte Oberfläche (3) eine Anordnung von Vertiefungen (4) in Form von kreisförmigen Löchern umfasst, deren Achsen insbesondere im Wesentlichen senkrecht zu der texturierten Oberfläche (3) sind.

12. Verbindung nach Anspruch 11, **dadurch gekennzeichnet, dass** das Verhältnis zwischen dem Achsabstand (E) der kreisförmigen Löcher (4), also dem Abstand zwischen den Mittelpunkten zweier benachbarter kreisförmiger Löcher (4), und dem Radius eines kreisförmigen Lochs (4), der der Hälfte des Durchmessers (D) eines kreisförmigen Lochs (4) entspricht, kleiner oder gleich 3 ist.

13. Verbindung nach einem der Ansprüche 1 bis 10, **dadurch gekennzeichnet, dass** die texturierte Oberfläche (3) eine Anordnung von Vertiefungen (4) in Form von Löchern mit länglicher Form, insbesondere mit länglicher, elliptischer und/oder rechteckiger Form, umfasst.

14. Verbindung nach Anspruch 13, **dadurch gekennzeichnet, dass** die Hauptachse jedes Lochs mit länglicher Form (4) im Wesentlichen parallel zur Dichtungslinie der Verbindung verläuft, und zwar an jeder Stelle der Dichtungsverbindung (1).

15. Verbindung nach einem der vorhergehenden Ansprüche, **dadurch gekennzeichnet, dass** die metallische Dichtungsverbindung (1) eine Dichtungsverbindung ist, deren Querschnitt eine O-Form aufweist, oder eine Dichtungsverbindung, deren Querschnitt eine C-Form aufweist, oder eine Dichtungsverbindung, deren Querschnitt eine liegende U-Form aufweist.

## Claims

1. Static metal seal (1) having, in transverse section, at least one hollow portion (9) configured to limit the force needed to crush the seal (1), and including an outer sealing layer (8), **characterised in that** it includes a textured surface (3) configured to come into contact with the surfaces to be sealed, said textured surface (3) including a network of depressions (4) spaced apart from one another on the textured surface (3), the depressions (4) being blind, not completely passing through the outer sealing layer (8), and not communicating with one another, said textured surface (3) being produced by laser material removal.

2. Seal according to claim 1, **characterised in that** the outer sealing layer (8) alone forms the metal seal (1).

3. Seal according to claim 1, **characterised in that** it includes a metal core (6) enveloped in the outer sealing layer (8).

4. Seal according to claim 3, **characterised in that** the metal core (6) consists of a spring, particularly a helical spring with contiguous coils closed on itself and having, in the resting state, the shape of a toroid.

5. Seal according to claim 4, **characterised in that** the outer sealing layer (8), wherein the core (6) is inserted, has, in the resting state, the shape of a toric surface whereof the generating circle does not close on itself.

6. Seal according to any one of the preceding claims, **characterised in that** the outer sealing layer (8) includes a sealing barrier (2) and a contact sealing layer (5, 5a, 5b), particularly a layer of an electrolytic deposit (5a) and/or an additional sealing barrier (5b).

7. Seal according to claim 6, **characterised in that** the depressions (4) are present on the contact sealing layer (5, 5a, 5b) blindly or not.

8. Seal according to any one of the preceding claims, **characterised in that** the depth axis of each depression (4) is substantially perpendicular to the textured surface (3).

9. Seal according to any one of the preceding claims, **characterised in that** each depression (4) is defined by at least one wall hollowed out into the textured surface (3) that is substantially perpendicular to the textured surface (3).

10. Seal according to any one of the preceding claims, **characterised in that** the bearing area ratio, defined in the textured surface (3) by the surface without depressions (4) to total surface ratio of the textured surface (3), is less than 40%.

11. Seal according to any one of the preceding claims, **characterised in that** the textured surface (3) includes a network of depressions (4) in the form of circular holes, whereof the axes are particularly substantially perpendicular to the textured surface (3).

12. Seal according to claim 11, **characterised in that** the ratio between the pitch (E) of the circular holes (4), namely the distance between the centres of two adjacent circular holes (4), and the radius of a circular hole (4), corresponding to half of the diameter (D) of a circular hole (4), is less than or equal to 3.

13. Seal according to any one of claims 1 to 10, **characterised in that** the textured surface (3) includes a network of depressions (4) in the form of elongated-shaped holes, particularly oblong, elliptical and/or rectangular-shaped.

14. Seal according to claim 13, **characterised in that** the large axis of each elongated-shaped hole (4) is substantially parallel with the sealing line of the seal, and this in any point of the seal (1).

15. Seal according to any one of the preceding claims, **characterised in that** the metal seal (1) is a seal whereof the section is O-Ring or a seal whereof the section is C-Ring or a seal whereof the section is recumbent U-shaped.
